# EUROPÄISCHE PATENTSCHRIFT

(11) **EP 4 612 028 B1**
(45) Veröffentlichungstag und Bekanntmachung des Hinweises auf die Patenterteilung: **09.09.2026**
(21) Anmeldenummer: 23800449.3
(22) Anmeldetag: 01.11.2023
(51) Int. Cl.: B60T 7/04, B60T 7/14, B60T 7/22, B60T 17/22

(54) **VERFAHREN ZUM DURCHFÜHREN EINES SITUATIONSBEDINGTEN BREMSVORGANGS EINES FAHRZEUGES MITTELS EINER ELEKTRONISCHEN FESTSTELLBREMSE, ELEKTRONISCHES BREMSSYSTEM SOWIE KRAFTFAHRZEUG**
METHOD FOR CARRYING OUT A SITUATION-CONTINGENT BRAKING OPERATION OF A VEHICLE BY MEANS OF AN ELECTRONIC PARKING BRAKE, ELECTRONIC BRAKING SYSTEM AND MOTOR VEHICLE
PROCÉDÉ DE MISE EN OEUVRE D'UNE OPÉRATION DE FREINAGE EN CAS DE SITUATION ACCIDENTELLE D'UN VÉHICULE AU MOYEN D'UN FREIN DE STATIONNEMENT ÉLECTRONIQUE, SYSTÈME DE FREINAGE ÉLECTRONIQUE ET VÉHICULE À MOTEUR

(30) Priorität: 03.11.2022 DE 102022211629
(43) Veröffentlichungstag der Anmeldung: 10.09.2025
(73) Patentinhaber: VOLKSWAGEN AKTIENGESELLSCHAFT, 38440 Wolfsburg (DE)
(72) Erfinder: ALAGÖZ, Halit, 30519 Hannover (DE); GÄHLE, Florian, 30459 Hannover (DE); PROTZE, Christopher, 38442 Wolfsburg (DE)
(86) Internationale Anmeldenummer: PCT/EP2023/080497
(87) Internationale Veröffentlichungsnummer: WO 2024/094768

(56) Entgegenhaltungen:
- DE-A1- 102006 028 413
- DE-A1- 102013 218 813
- DE-A1- 102015 007 856
- DE-A1- 102018 222 002
- DE-A1- 102020 131 926
- US-A1- 2013 138 316
- US-A1- 2018 362 013
- US-A1- 2020 377 098
- US-A1- 2022 105 908
- US-B2- 9 145 114

## Beschreibung

Die Erfindung betrifft ein Verfahren zum Durchführen eines Bremsvorgangs eines Fahrzeuges.

Des Weiteren betrifft die Erfindung ein elektronisches Bremssystem mit einer Erfassungseinheit, einer Auswerteeinheit und einer elektrischen Feststellbremse. Ebenfalls betrifft die Erfindung ein Kraftfahrzeug mit einem elektronischen Bremssystem.

Fahrzeuge weisen die verschiedensten Sicherheitssysteme auf, um die Sicherheit für Fahrzeuge zu erhöhen. Manuell betriebene Fahrzeuge weisen zum Durchführen eines Bremsvorgangs des Fahrzeugs ein Bremspedal auf, welches durch den Fahrer des Fahrzeugs betätigt werden kann, um das Fahrzeug abzubremsen. Aus sicherheitstechnischen und gesetzlichen Vorgaben weisen Fahrzeuge neben einem Bremspedal eine dazu weitere beziehungsweise zweite Betätigungseinheit auf. Hierbei kann es sich um die Parkbremse beziehungsweise Handbremse beziehungsweise Parkbremstaster handeln. Dieser kann ausgelöst werden, um das Fahrzeug zu bremsen. Dabei wird für diese zweite Betätigungseinheit ein fest definierter Verzögerungswert vorgegeben beziehungsweise eingestellt.

Die US 2021/0107621 A1 beschreibt ein Fahrzeugkontrollsystem. Dieses System weist eine erste Einheit auf, um eine Zieltrajektorie für ein automatisiertes Fahren eines Fahrzeuges zu bestimmen. Eine zweite Einheit ist vorgesehen, um das Fahrzeug entsprechend der ermittelten Trajektorie autonom zum Ziel steuern zu können.

Ferner offenbart die US 2019/0061772 A1 ein System zur Überwachung eines Gesundheitszustands eines Fahrzeuginsassen. Hierbei können über eine Einheit, welche durch die Passagiere am Körper getragen werden kann, physiologische Parameter erfasst werden. Mit einem Diagnosemodul kann entsprechend den erfassten Parametern ein Gesundheitszustand des Passagiers bestimmt werden.

Beispielsweise offenbart die DE 10 2020 131 926 A1 ein Verfahren zum Betreiben einer Mensch-Maschine-Schnittstelle eines autonom fahrenden Fahrzeugs, bei dem ein Betätigungselement durch einen Insassen betätigt wird.

Die US 2020 / 377 098 A1 offenbart ein Assistenzsystem für ein Fahrzeug, wobei eine Not-Stopp-Assistenzfunktion bereitgestellt werden kann.

Ferner offenbart die US 2022 / 105 908 A1 ein Verfahren zur Kontrolle eines Fahrzeugs durch Abbremsen des Fahrzeugs auf Basis einer betätigten Parkbremse.

Die US 2018 / 362 013 A1 offenbart ein Assistenzsystem für ein Fahrzeug, welches eine Notstopp-Funktion aufweist. Diese Notstopp-Funktion kann auf Basis einer Bestätigung einer Parkbremse durchgeführt werden.

Eine Aufgabe der vorliegenden Erfindung besteht darin, einen Bremsvorgang eines Fahrzeuges, welcher manuell durch einen Passagier des Fahrzeugs ausgelöst wurde, sicherer durchführen zu können.

Diese Aufgabe wird durch ein Verfahren, ein elektronisches Bremssystem sowie ein Fahrzeug gemäß den unabhängigen Patentansprüchen gelöst. Sinnvolle Weiterbildungen ergeben sich aus den abhängigen Patentansprüchen.

Ein Aspekt der Erfindung betrifft ein Verfahren zum Durchführen eines Bremsvorgangs eines Fahrzeugs, wobei folgende Schritte durchgeführt werden: Erkennen eines Betätigens einer elektrischen Feststellbremse des Fahrzeugs während einer Fortbewegungsfahrt des Fahrzeugs durch einen Insassen des Fahrzeugs; Erfassen von zumindest einer Umgebungsinformation in einer Umgebung des Fahrzeugs; Bestimmen einer Bremsstrategie abhängig von der zumindest einen Umgebungsinformation und von der betätigten elektrischen Feststellbremse durch eine Auswerteeinheit; Durchführen des Bremsvorgangs abhängig von der bestimmten Bremsstrategie.

Durch das vorgeschlagene Verfahren kann ein Bremsvorgang eines Fahrzeuges, welcher durch einen Insassen des Fahrzeuges ausgelöst wurde, sicherer, insbesondere verkehrssicher, durchgeführt beziehungsweise ausgeführt werden. Durch das Bestimmen der Bremsstrategie basierend auf der Umgebungsinformation, also aufgrund von Informationen in der Umgebung des Fahrzeuges, kann der Bremsvorgang situationsabhängig, also an die jeweilige Situation angepasst, durchgeführt werden, so dass dieser Bremsvorgang derart durchgeführt werden kann, dass es beispielsweise zu keinen Kollisionen, Beinaheunfällen oder sonstige auf die Insassen negativ einwirkende Geschehnisse kommt.

Durch das Erfassen der zumindest einen Umgebungsinformation oder mehreren Umgebungsinformationen in der Umgebung beziehungsweise im Umfeld des Fahrzeugs kann die jeweilige Situation, in welcher sich das Fahrzeug befindet, analysiert werden. Dadurch kann ein situationsangepasster und der Situation entsprechender Bremsvorgang durchgeführt werden. Somit können Auffahrunfälle beispielsweise verhindert werden. Mittels einer Erkennungseinheit oder einer Erfassungseinheit kann das Betätigen beziehungsweise Auslösen beziehungsweise Aktivieren der elektrischen Feststellbremse erkannt beziehungsweise erfasst werden. Hierbei erfolgt ein manuelles Betätigen des Insassen des Fahrzeugs. Hierbei kann durch den Fahrer oder durch einen Beifahrer die elektrische Feststellbremse betätigt werden. Sollte beispielsweise der Fall eintreten, dass der Fahrer des Fahrzeuges nicht mehr in der Lage ist, das Fahrzeug zu führen, so kann der Beifahrer die elektrische Feststellbremse betätigen, so dass in Abhängigkeit von der Bremsstrategie ein sicherer Bremsvorgang durchgeführt werden kann. Ebenso kann der zumindest teilweise nicht fahrtüchtige Fahrer die elektrische Feststellbremse betätigen, um das Fahrzeug sicher zum Stillstand zu bewegen. Somit können die verschiedensten Situationen beziehungsweise Gegebenheiten berücksichtigt werden, um das Fahrzeug ohne Gefährdung des umliegenden Verkehrs zu verzögern und sicher zum Stillstand zu bringen.

Bei der elektrischen Feststellbremse (EPB - "Electric parking brake"), auch automatische Parkbremse genannt, erfolgt mittels Aktoren an der Hinterradbremse des Fahrzeuges und eines Steuergeräts ein Abbremsen des Fahrzeuges. Insbesondere erfolgt das Betätigen der elektrischen Feststellbremse manuell durch einen Menschen und nicht automatisch beziehungsweise automatisiert durch ein System.

Die elektrische Feststellbremse kann beispielsweise als Taster, wie zum Beispiel ein Druck-Zieh-Taster oder Push-Taster im Bereich der Mittelkonsole im Innenraum des Fahrzeugs angeordnet sein, so dass dieser für alle Insassen des Fahrzeuges erreichbar ist.

Bei der Auswerteeinheit kann es sich insbesondere um eine elektronische Auswerteeinheit beziehungsweise um eine elektronische Recheneinheit handeln. Mit Hilfe der Auswerteeinheit kann die Bremsstrategie ermittelt beziehungsweise bestimmt werden und an die elektrische Feststellbremse und/oder ein elektronisches Bremssystem des Fahrzeugs übermittelt beziehungsweise übertragen werden, so dass der Bremsvorgang durchgeführt beziehungsweise eingeleitet werden kann.

Es ist vorgesehen, dass eine Zeitdauer, wie lange ein Betätigungselement der elektrischen Feststellbremse durch den Insassen betätigt wird, bestimmt wird, wobei die bestimmte Zeitdauer bei einem Bestimmen der Bremsstrategie berücksichtigt wird. Zusätzlich wird der Bremsvorgang so lange durchgeführt, so lange das Betätigungselement betätigt wird. Durch das Bestimmen beziehungsweise Messen der Zeitdauer kann die Bremsstrategie an die jeweilige Situation angepasst werden. Beispielsweise kann bei einer kurzen Zeitdauer beziehungsweise Betätigungsdauer des Betätigungselements der elektrischen Feststellbremse vorliegen, dass die Dringlichkeit für die Durchführung des Bremsvorgangs weniger wichtig ist. Bei einer sehr kurzen Zeitdauer kann des Weiteren erkannt beziehungsweise festgestellt werden, dass eventuell das Betätigungselement aus Versehen beziehungsweise unbeabsichtigt betätigt wurde. Durch dieses Berücksichtigen kann vor allem verhindert werden, dass ein rascher Bremsvorgang, insbesondere ein Notbremsvorgang, durchgeführt wird und insbesondere verhindert werden kann, dass ein hinter dem Fahrzeug fahrendes Fahrzeug auf das Fahrzeug auffährt, da dieses keine ausreichende Reaktionszeit zur Verfügung hat. Ebenfalls können die Insassen durch einen raschen Bremsvorgang und die dabei einwirkenden Kräfte auf die Insassen geschützt werden.

Sollte wiederum eine lange Zeitdauer oder eine dauerhafte Betätigung des Betätigungselements bestimmt beziehungsweise erkannt werden, so kann darauf geschlossen werden, dass eine Gefahrensituation, ein Notfall oder eine Notsituation vorliegt und ein Bremsvorgang dringend durchzuführen ist. Dies kann bei der Bestimmung der Bremsstrategie berücksichtigt beziehungsweise zusätzlich berücksichtigt werden, so dass der Bremsvorgang an die jeweilige Situation angepasst durchgeführt werden kann. Des Weiteren kann der Bremsvorgang, welcher durch die elektrische Feststellbremse durchgeführt wird, so lange durchgeführt beziehungsweise aufrechterhalten werden, wie das Betätigungselement betätigt wird. Somit kann der Insasse das Betätigungselement so lange betätigen, bis das Fahrzeug tatsächlich sicher zum Stillstand gebracht wurde.

Bei dem Betätigungselement kann es sich beispielsweise um einen Taster oder anderes Bedienelement im Bereich der Mittelkonsole des Fahrzeugs handeln.

In einem Ausführungsbeispiel ist vorgesehen, dass der Auswerteeinheit Navigationsinformationen und/oder Informationen von weiteren Fahrzeugen in der Umgebung bereitgestellt werden, wobei die Navigationsinformationen und/oder die Informationen des weiteren Fahrzeugs bei dem Bestimmen der Bremsstrategie berücksichtigt werden. Durch diese Informationen können der Auswerteeinheit weitere umfangreiche Informationen beziehungsweise Daten zur Verfügung gestellt werden, um die Bremsstrategie situationsangepasster bestimmen beziehungsweise ermitteln zu können. Durch ein Navigationssystem des Fahrzeugs oder durch ein Navigationssystem eines Insassen des Fahrzeugs können die Auswerteinformationen der Auswerteeinheit bereitgestellt werden. Hierbei kann es sich insbesondere um Kartendaten einer digitalen Karte handeln. Durch die Navigationsinformationen kann beispielsweise auf ein bevorstehendes Hindernis, auf eine Kurve, eine Ampel, einen Verkehrsstau oder ein anderweitiges Gefahrenpotential entlang oder auf oder in einem Bereich der Route beziehungsweise Streckenverlaufs des Fahrzeugs während der Fortbewegungsfahrt frühzeitig reagiert werden. Die Informationen der weiteren Fahrzeuge können beispielsweise weitere Umfeldinformationen, welche durch Sensoreinheiten der weiteren Fahrzeuge erfasst wurden, der Auswerteeinheit zur Verfügung gestellt werden. Des Weiteren können die weiteren Fahrzeuge ihre aktuelle Position und ihren weiteren Fahrverlauf der Auswerteeinheit zur Verfügung stellen. Anhand dieser Informationen kann die Bremsstrategie besser auf die jeweilige Situation beziehungsweise auf die jeweilige Umgebung des Fahrzeuges abgestimmt werden, so dass für die Insassen des Fahrzeuges und für die weiteren Fahrzeuge beziehungsweise anderen Verkehrsteilnehmer keine Gefahr während des Bremsvorgangs besteht. Die Informationen der weiteren Fahrzeuge können beispielsweise über Kommunikationsverbindungen zwischen den Fahrzeugen übertragen werden. Hierbei kann beispielsweise eine Car-2-Car- oder eine Car-2-X-Kommunikationsverbindung verwendet werden.

In einem Ausführungsbeispiel ist vorgesehen, dass abhängig von einer aktuellen Trajektorie des Fahrzeugs und von der zumindest einen Umgebungsinformation eine Brems-Trajektorie bestimmt wird, wobei der Bremsvorgang abhängig von der bestimmten beziehungsweise erzeugten Brems-Trajektorie durchgeführt wird. Um den Bremsvorgang sicher für die Insassen des Fahrzeuges und für die sich in der Umgebung des Fahrzeugs befindenden weiteren Verkehrsteilnehmer durchführen zu können, kann die Brems-Trajektorie ermittelt beziehungsweise erzeugt werden. Abhängig von der Umgebungsinformation, also von der Umgebung beziehungsweise von dem Umfeld des Fahrzeuges kann beispielsweise der vorausliegende Streckenabschnitt bewertet beziehungsweise analysiert werden, so dass diese Informationen mit der aktuell durchfahrenen und/oder einer vergangenen Trajektorie des Fahrzeuges die Brems-Trajektorie erzeugt wird. Mit der Brems-Trajektorie kann ein sicherer Bremsweg charakterisiert werden. Die Brems-Trajektorie kann ebenfalls der Bremsstrategie hinzugefügt werden, so dass ein sicherer Bremsvorgang durchgeführt werden kann. Mit Hilfe der Brems-Trajektorie kann ein Bremsweg beziehungsweise ein Bremsverlauf ermittelt beziehungsweise prädiziert werden.

Bei dem Durchführen des Bremsvorgangs mittels der elektrischen Feststellbremse kann zum einen eine Verzögerung beziehungsweise eine Bremsung des Fahrzeuges durchgeführt beziehungsweise dynamisch durchgeführt werden und mittels der Brems-Trajektorie können Lateralbewegungen beziehungsweise laterale Bewegungen, also die Querführung, des Fahrzeugs beeinflusst werden. Hierbei können entweder systemseitig Lenkeingriffe beziehungsweise Lenkvorgänge durch ein Sicherheitssystem des Fahrzeuges vorgenommen werden. Ebenso denkbar ist, dass den Insassen des Fahrzeuges akustisch, optisch und/oder haptisch Hinweise beziehungsweise Handlungsanweisungen ausgegeben werden, so dass entsprechende Lenkeingriffe durch die Insassen vorgenommen werden können. Somit kann bei dem Durchführen des Bremsvorgangs erreicht werden, dass das Fahrzeug nicht von der Fahrbahn abkommt und somit nicht versehentlich auf die Gegenfahrbahn oder eine andere Fahrbahn ausschert.

In einem Ausführungsbeispiel ist vorgesehen, dass mit einer Innenraum-Erfassungseinheit die Insassen des Fahrzeugs, welche sich in einem Fahrgastraum des Fahrzeugs befinden, erfasst werden, wobei abhängig von den erfassten Insassen ein Zustand und/oder ein Verhalten zumindest eines Insassen der Insassen bestimmt wird. Der Zustand und/oder das Verhalten des zumindest einen Insassen wird bei dem Bestimmen der Bremsstrategie berücksichtigt. Zusätzlich oder anstatt kann abhängig von dem Zustand und/oder dem Verhalten des zumindest einen Insassen ein systemseitiger Eingriff in eine Querführung des Fahrzeugs durchgeführt werden. Mit Hilfe der Innenraum-Erfassungseinheit oder einer Innenraumkamera kann der zumindest ein Insasse oder alle Insassen des Fahrzeuges kontinuierlich überwacht werden. Hierbei können erfasste Informationen der Innenraum-Erfassungseinheit der Auswerteeinheit zur Verfügung gestellt werden, so dass abhängig von den erfassten Insassen beziehungsweise den erfassten Informationen der Zustand und/oder das Verhalten ermittelt beziehungsweise bestimmt werden kann. Bei dem Zustand ist beispielsweise ein Müdigkeitszustand, ein Aufmerksamkeitszustand, ein Gesundheitszustand, ein Krankheitszustand, eine Fahruntüchtigkeit, eine temporäre Einschränkung oder anderweitige körperliche oder psychische oder physische Einschränkungen eines Insassen des Fahrzeuges zu verstehen. Folglich kann hiermit also festgestellt werden, ob zumindest einer der Insassen einen gefährlichen beziehungsweise gesundheitsgefährlichen Zustand beziehungsweise Verhalten aufweist und dies bei der Bremsstrategie berücksichtigt wird. Sollte beispielsweise festgestellt werden, dass zumindest ein Insasse ohnmächtig ist, verletzt ist oder beispielsweise einen Schlaganfall erlitten hat, so wird die Bremsstrategie so bestimmt, dass unverzüglich ein sicherer, aber dennoch rascher Bremsvorgang durchgeführt wird, um so schnell wie möglich das Fahrzeug sicher zum Stillstand zu bringen.

Vor allem kann hier das Verhalten beziehungsweise der Zustand des zumindest einen Insassen, also beispielsweise des Fahrers, überprüft werden. Sollte hierbei festgestellt werden, dass der Fahrer nicht mehr in der Lage ist, Lenkvorgänge oder sonstige Betätigungen zum Steuern des Fahrzeuges durchführen zu können, so kann durch ein Sicherheitssystem des Fahrzeuges ein systemseitiger Eingriff in die Querführung des Fahrzeugs vorgenommen werden, so dass das Fahrzeug vor allem nicht von der Fahrspur abkommt.

Des Weiteren können mit weiteren Sensorsystemen physische und/oder psychische Parameter hinsichtlich der Insassen des Fahrzeugs erfasst werden und ebenfalls bei der Bestimmung der Bremsstrategie berücksichtigt werden.

In einem Ausführungsbeispiel ist vorgesehen, dass die Umgebung des Fahrzeugs und/oder ein Zustand des Fahrzeugs während der Fortbewegungsfahrt erfasst wird, so dass während der Fortbewegungsfahrt fortlaufend ein dynamisches Prädizieren einer Prädiktions-Bremsstrategie erfolgen kann, wobei die Prädiktions-Bremsstrategie bei dem Bestimmen der Bremsstrategie bei der betätigten elektrischen Feststellbremse berücksichtigt werden kann. Somit kann mit Hilfe der Prädiktions-Bremsstrategie eine Vorkonditionierung des Fahrzeuges, eines elektrischen Bremssystems und/oder der elektrischen Feststellbremse vorgenommen werden. Hierzu kann eine kontinuierliche Erfassung der Umgebung des Fahrzeugs und des Zustands des Fahrzeugs vorgenommen werden. Somit kann fortlaufend für einen jeweiligen Zeitpunkt beziehungsweise eine Situation, eine an diese jeweilige aktuelle Situation eine vorausschauende Bremsstrategie bestimmt werden. Diese kann sich zwar jederzeit wiederum ändern, doch diese vorberechneten beziehungsweise vorbestimmten Strategien können bei einer späteren Bestimmung einer Bremsstrategie berücksichtigt werden, so dass eine jeweilige Bremsstrategie schneller und effizienter bestimmt werden kann. Bei dem Zustand des Fahrzeuges ist beispielsweise ein Zustand eines Fahrzeugsystems, einer Fahrzeugkomponente, eines Bremssystems, der elektrischen Feststellbremse oder eines sonstigen Fahrzeugsystems zu verstehen. Diese können eine durchgeführte Verzögerung beziehungsweise ein durchgeführtes Bremsen des Fahrzeuges beeinträchtigen, so dass beispielsweise der Bremsweg sich verlängern könnte. Dies kann bei der Bestimmung der Bremsstrategie berücksichtigt werden, da in diesem Fall ein Bremsvorgang frühzeitiger und stärker durchgeführt werden muss, um diesen aktuellen Zustand kompensieren zu können.

In einem Ausführungsbeispiel ist vorgesehen, dass bei dem Erkennen des Betätigens der elektrischen Feststellbremse überprüft wird, ob aufgrund einer aktuellen Verkehrssituation und/oder Fahrzeugsituation und/oder Insassensituation ein Bremsvorgang durchzuführen ist oder nicht. Durch dieses Überprüfen können unbeabsichtigte Betätigungen der elektrischen Feststellbremse erkannt werden, so dass es nicht zu einem nicht gewollten Bremsvorgang kommt. Hierbei kann neben der Verkehrssituation, der Fahrzeugsituation und/oder der Insassensituation systemseitig überprüft werden, ob das Betätigen der elektrischen Feststellbremse zu der aktuellen Situation passt und ob tatsächlich ein Bremswunsch durch einen Insassen gewollt war oder ob zumindest einer der Insassen aus Versehen die Feststellbremse betätigt hat. Des Weiteren kann festgestellt werden, dass eventuell ein Betätigungselement der elektrischen Feststellbremse defekt ist.

In einem Ausführungsbeispiel ist vorgesehen, dass mit der Bremsstrategie eine Bremskraft für zumindest eine Bremsanlage des Fahrzeugs, eine Bremsdauer, eine Bremsintensität, ein Startzeitpunkt und/oder eine Art des Bremsvorgangs charakterisiert wird. Mit Hilfe der Bremsstrategie kann auf vielfältigste Art und Weise ein situationsangepasster und zu dem jeweiligen Zeitpunkt passender Bremsvorgang durchgeführt werden. Bei der Art des Bremsvorgangs kann beispielsweise zwischen einem normalen Bremsvorgang und einem Notfallbremsvorgang unterschieden werden.

Ein weiterer Aspekt der Erfindung betrifft ein elektronisches Bremssystem mit einer Erfassungseinheit, einer Auswerteeinheit und einer elektrischen Feststellbremse, wobei das elektronische Bremssystem zum Durchführen eines Verfahrens nach einem vorherigen Aspekt oder einer vorteilhaften Weiterbildung daraus ausgebildet ist. Insbesondere kann mit dem soeben beschriebenen elektronischen Bremssystem ein Verfahren nach dem vorherigen Aspekt oder einer vorteilhaften Weiterbildung davon ausgeführt werden.

Die elektronische beziehungsweise das elektrische Bremssystem beziehungsweise Bremseinrichtung des Fahrzeuges kann die Erfassungseinheit zum Erfassen eines Betätigens der elektrischen Feststellbremse aufweisen. Des Weiteren kann das elektronische Bremssystem die Auswerteeinheit, insbesondere eine elektronische Auswerteeinheit, aufweisen. Des Weiteren kann das elektronische Bremssystem weitere Bremseinheiten, Aktoren oder Bremsanlagen aufweisen.

Ein weiterer Aspekt der Erfindung betrifft ein Fahrzeug mit einem elektronischen Bremssystem nach dem vorherigen Aspekt oder einer vorteilhaften Weiterbildung.

Bei dem Fahrzeug kann es sich um ein manuell betriebenes Fahrzeug handeln. Insbesondere handelt es sich bei dem Fahrzeug um ein Kraftfahrzeug, wie einen Personenkraftwagen oder Lastkraftwagen.

Ein Umfeldsensorsystem kann beispielsweise als Sensorsystem verstanden werden, das dazu in der Lage ist, Sensordaten oder Sensorsignale zu erzeugen, welche eine Umgebung Umfeldsensorsystems abbilden, darstellen oder wiedergeben. Insbesondere ist die Fähigkeit, elektromagnetische oder sonstige Signale aus der Umgebung zu erfassen, nicht hinreichend, um ein Sensorsystem als Umfeldsensorsystem zu erachten. Beispielsweise können Kameras, Radarsysteme, Lidarsysteme oder Ultraschallsensorsysteme als Umfeldsensorsysteme aufgefasst werden.

Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "applicationspecific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Zu der Erfindung gehören auch Weiterbildungen des erfindungsgemäßen elektronisches Bremssystems und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen elektronisches Bremssystems und des erfindungsgemäßen Kraftfahrzeugs hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine schematische Darstellung eines Fahrzeugs mit einer elektrischen Feststellbremse;
- Fig. 2: einen schematischen Ablauf eines Bremsvorgangs mittels der betätigten elektrischen Feststellbremse aus Fig. 1.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

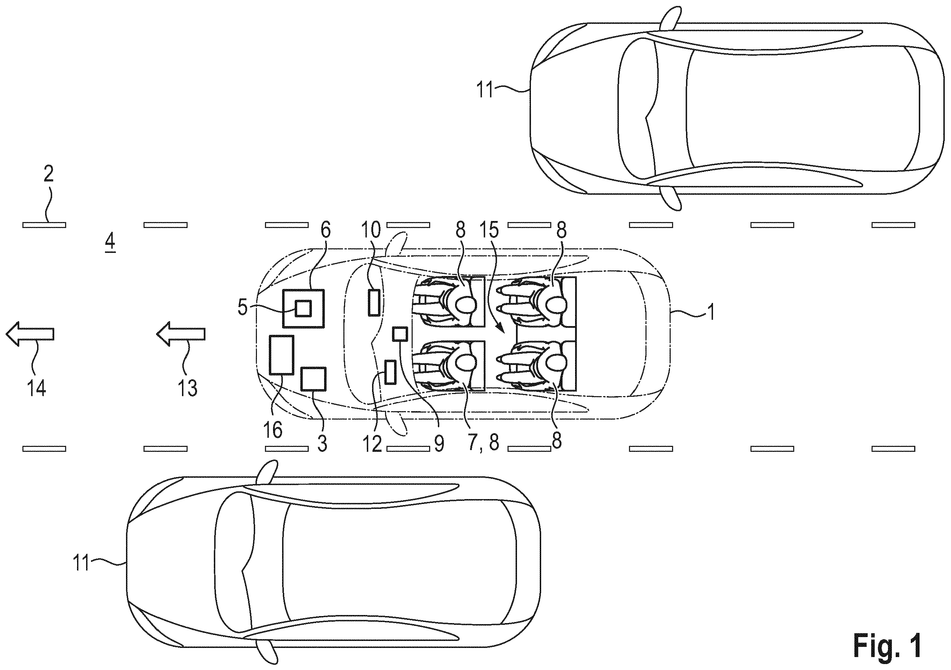

In der Fig. 1 ist schematisch ein Fahrzeug 1 dargestellt, welches sich auf einer Fortbewegungsfahrt entlang einer Fahrspur 2 fortbewegt. Insbesondere wird das Fahrzeug 1 manuell betrieben beziehungsweise gesteuert. Neben den herkömmlichen Bremsanlagen, welche durch ein Betätigen eines Bremspedals durch einen Fahrer aktiviert werden, kann das Fahrzeug 1 eine elektrische Feststellbremse 3 aufweisen. Diese kann als zusätzliche beziehungsweise weitere Bremseinheit des Fahrzeugs 1 fungieren.

Während der Fortbewegungsfahrt des Fahrzeugs 1 kann zumindest eine Information in einer Umgebung 4 des Fahrzeugs 1 erfasst werden. Hierbei kann die jeweilige Verkehrslage beziehungsweise Verkehrssituation bewertet beziehungsweise ausgewertet werden. Diese Informationen können einer Auswerteeinheit 5 beziehungsweise einer elektronischen Auswerteeinheit bereitgestellt beziehungsweise übermittelt werden. Die Auswerteeinheit 5 kann beispielsweise Bestandteil eines elektronischen Bremssystems des Fahrzeugs ist. Ebenso denkbar ist, dass die Auswerteeinheit 5 extern zum Fahrzeug ausgebildet ist und beispielsweise als Backend, Server oder Datenwolke ausgestaltet ist und mit dem elektronischen Bremssystem 6 kommunikativ vernetzt ist.

Während der Fortbewegungsfahrt des Fahrzeugs 1 kann es beispielsweise vorkommen, dass der Insasse 7 des Fahrzeugs 1, welcher sich in einem Fahrgastinnenraum 15 des Fahrzeugs 1 befindet, mentale, physische, psychische oder anderweitige gesundheitliche Probleme aufweist. Beispielsweise kann es sich bei dem Insassen 7 um den Fahrer des Fahrzeugs 1 handeln. Sollte der Fahrer 7 aufgrund seines aktuellen Gesundheitszustands nicht mehr in der Lage sein, das Fahrzeug 1 sicher steuern beziehungsweise lenken zu können, da er beispielsweise ohnmächtig ist, so könnte durch einen Insassen 8, beispielsweise dem Beifahrer des Fahrzeugs 1, eine Bremsung eingeleitet werden beziehungsweise eine Notfallbremsung eingeleitet werden. Hierzu kann ein Betätigungselement 9 der elektrischen Feststellbremse 3 durch einen Insassen 8 manuell betätigt werden. Dieses Betätigen 9 kann fahrzeugseitig erfasst beziehungsweise erkannt werden, so dass eine Information bereitsteht, dass unmittelbar ein Bremsvorgang durchzuführen ist. Hierzu kann mit Hilfe der Auswerteeinheit 5 abhängig von der zumindest einen Umgebungsinformation und von dem Betätigen der Feststellbremse 3 zumindest eine Bremsstrategie oder mehrere Bremsstrategien bestimmt werden. Basierend auf dieser Bremsstrategie kann ein Bremsvorgang, insbesondere durch das elektronische Bremssystem beziehungsweise die elektrische Feststellbremse 3 durchgeführt werden. Somit kann beispielsweise ein Fahrer oder ein Beifahrer oder ein Insasse 8 durch Betätigung des Bedienelements der elektrischen Feststellbremse 3 einen Bremswunsch äußern, welcher unter Berücksichtigung der Umgebung 4 und insbesondere von Sensordaten mittels der elektrischen Feststellbremse 3 durchgeführt werden kann. Um vor allem die Umgebung 4 besser beurteilen beziehungsweise bewerten zu können, können weitere Informationen der Auswerteeinheit 5 für das Bestimmen der Bremsstrategie zur Verfügung gestellt werden. Hierbei können beispielsweise Navigationsinformationen, Navigationsdaten und/oder Kartendaten eines Navigationssystems 10 des Fahrzeugs 1 berücksichtigt werden. Ein weiterer Parameter beziehungsweise eine weitere wichtige Information, um einen sicheren Bremsvorgang durchführen zu können, können Informationen weiterer Fahrzeuge 11 in der Umgebung 4 sein. Beispielsweise können die weitere Fahrzeuge 11 in benachbarten Fahrspuren zu der Fahrspur 2 liegen. Dies ist für den Fall des Bremsvorgangs vorteilhaft, da sichergestellt werden kann, dass es beim Durchführen des Bremsvorgangs zu keiner gefährlichen Beeinträchtigung der benachbarten Fahrzeuge 11 kommt.

Des Weiteren können die Insassen 8 mittels einer Innenraum-Erfassungseinheit 12 kontinuierlich erfasst werden, so dass beispielsweise ein bewusstloser, ohnmächtiger oder eingeschlafener Fahrer 7 frühzeitig erkannt werden kann. Hierzu kann beispielsweise eine akustische, haptische oder visuelle Warnung an die weiteren Insassen 8 ausgegeben werden, so dass diese beispielsweise die elektrische Feststellbremse 3 betätigen. Anderenfalls kann diese Information zusätzlich bei der Bestimmung der Bremsstrategie berücksichtigt werden, wenn die anderen Insassen 8 bereits das Betätigungselement 9 betätigt haben. Somit weiß das Fahrzeug, dass aktuell eine tatsächliche Notsituation vorliegt und der Fahrer 7 nicht fahrtüchtig ist und der Bremsvorgang rasch durchgeführt werden muss. Insbesondere kann mit Hilfe des Betätigungselements 9 der elektrischen Feststellbremse 3 eine Notfalltrajektorie beziehungsweise ein Notbremsvorgang ausgelöst werden.

In einer Ausführung ist des Weiteren denkbar, dass das Betätigungselement 9 der elektrischen Feststellbremse 3 durch einen kombinierten Parksperren-Parkbremsen-Taster ersetzt wird. Denkbar wäre auch ein Softkey über ein Display des Fahrzeuges 1. In einer weiteren Ausführung kann das Betätigungselement 9 über den Parksperren-Taster ausgeführt werden.

Beispielsweise kann der Beifahrer des Fahrzeugs 1 bei einem kollabierten Fahrer 7 mittels des Betätigungselements 9 einen Bremsvorgang einleiten. Bei einem solchen kollabierten Fahrer 7 kann beispielsweise mit der Innenraum-Erfassungseinheit eine zusätzliche systemseitige Bestätigung der Auswerteeinheit 5 zur Verfügung gestellt werden. In diesem Fall kann eine Korrektur der Lateralbewegung systemseitig durch das Fahrzeug vorgenommen werden. Mit anderen Worten ausgedrückt kann mit Hilfe des Bedienelements 9 beziehungsweise Park-Bedienelements eine situationsbedingte Notbremsung vorgenommen beziehungsweise aktiviert beziehungsweise ausgelöst werden.

Um den Bremsvorgang besser beziehungsweise effizienter und sicherer vornehmen zu können, kann abhängig von einer aktuellen Trajektorie 13 des Fahrzeugs 1 und der zumindest einen Umgebungsinformation eine Brems-Trajektorie 14, mit welcher ein sicherer Bremsweg charakterisiert werden kann, bestimmt werden. Diese Trajektorie kann vor und während des Bremsvorgangs eingehalten werden. Hierbei kann, falls der Fahrer 7 oder ein anderer Insasse 8 noch fahrtüchtig ist, durch Warnhinweise im Fahrzeug 1 Anweisung gegeben werden. Anderenfalls können hier systemseitige Eingriffe vorgenommen werden.

In einem Ausführungsbeispiel kann vorgesehen sein, dass das Fahrzeug 1 eine ideale und sichere Trajektorie, also die Brems-Trajektorie 14, zur Fahrzeugverzögerung und zur Fahrzeugführung aus folgenden Daten ermittelt:
- Nutzung der Fahrzeugsensorik zur Erkennung der Straße der Umgebung 4 beziehungsweise des Umfelds, wie zum Beispiel Spur-Objekterkennung mittels Kamera, Radar und/oder Lidar
- Nutzung von Kartendaten und Kommunikationsdaten, beispielsweise mittels Car-2-X-Kommunikationen
- Nutzung der Innenraumüberwachung mittels der Innenraum-Erfassungseinheit 12 zur Feststellung der Fahrfähigkeit des Fahrers 7 oder der Insassen 8

Sollte beispielsweise ein kollabierter Fahrer 7 das Lenkrad in Richtung einer Leitplanke oder eines Seitenstreifens ziehen, so kann bei dem Betätigen des EPE-Tasters neben der Verzögerung des Fahrzeugs 1 zusätzlich die Lenkbewegung systemseitig korrigiert werden, so dass das Fahrzeug 1 sicher und kontrolliert zum Stillstand gebracht werden kann.

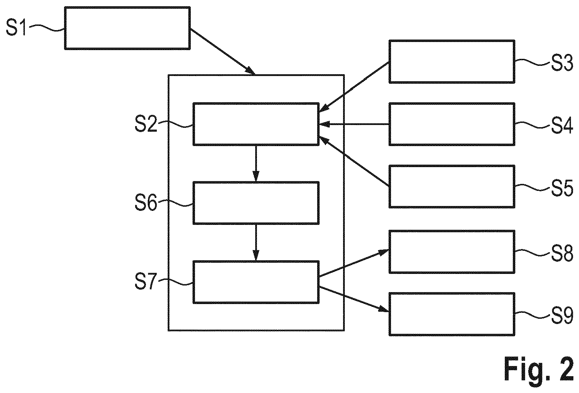

In der nachfolgenden Fig. 2 ist ein Ausführungsbeispiel eines Ablaufs für einen Bremsvorgang durch eine betätigte elektrische Feststellbremse 3 dargestellt.

In einem beispielhaften ersten Schritt S1 kann das Erkennen des Betätigens der elektrischen Feststellbremse 3 erfolgen. Anschließend kann in einem optionalen zweiten Schritt S2 die Erfassung der zumindest einen Umgebungsinformation in der Umgebung 4 des Fahrzeugs 1 mit einer Erfassungseinheit 16 vorgenommen werden. Somit erfolgt hier eine Umfelderfassung. Hierzu kann des Weiteren ein Umfelderfassungssystem des Fahrzeugs 1 verwendet werden. Die Erkennung des Umfelds kann in einem optionalen dritten Schritt S3 durch Sensoren des Fahrzeugs 1 erfolgen. In einem optionalen vierten Schritt S4 können mittels Car-2-X-Kommunikationssystemen Umfeldinformationen von weiteren Fahrzeugen 11 in der Umgebung 4 der Auswerteeinheit 5 zur Verfügung gestellt werden. In einem weiteren optionalen fünften Schritt S5 können Kartendaten des beispielsweisen Navigationssystems 10 der Auswerteeinheit 5 zur Verfügung gestellt werden. In einem nachfolgenden optionalen sechsten Schritt S6 kann die Auswertung der Umfelddaten beziehungsweise der Umgebung 4 durch die Auswerteeinheit 5 erfolgen. Anschließend kann in einem optionalen siebten Schritt S7 die Umsetzung des Bremsvorgangs und/oder der Trajektorie beziehungsweise der Brems-Trajektorie erfolgen. Hierzu kann in einem optionalen achten Schritt S8 die Längsführung des Fahrzeugs 1 angepasst beziehungsweise verändert werden. In einem optionalen neunten Schritt S9 kann wiederum die Querführung des Fahrzeugs 1 angepasst beziehungsweise verändert werden.

Insbesondere zeigt das Ausführungsbeispiel der Fig. 2 eine sensorbasierte Unterstützung einer Bremsung in einer Notfallsituation des Fahrzeugs 1.

### Bezugszeichenliste

- 1: Fahrzeug
- 2: Fahrspur
- 3: elektrische Feststellbremse
- 4: Umgebung
- 5: Auswerteeinheit
- 6: elektronisches Bremssystem
- 7: Fahrer
- 8: Insassen
- 9: Betätigungselement
- 10: Navigationssystem
- 11: weitere Fahrzeuge
- 12: Innenraum-Erfassungseinheit
- 13: aktuelle Trajektorie
- 14: Brems-Trajektorie
- 15: Fahrgastinnenraum
- 16: Erfassungseinheit

## Patentansprüche

1. Verfahren zum Durchführen eines Bremsvorgangs eines Fahrzeugs (1), wobei folgende Schritte durchgeführt werden:
- Erkennen eines Betätigens einer elektrischen Feststellbremse (3) des Fahrzeugs (1) während einer Fortbewegungsfahrt des Fahrzeugs (1) durch einen Insassen (8) des Fahrzeugs (1);
- Erfassen von zumindest einer Umgebungsinformation in einer Umgebung (4) des Fahrzeugs (1);
- Bestimmen einer Bremsstrategie abhängig von der zumindest einen Umgebungsinformation und von der betätigten elektrischen Feststellbremse (3) durch eine Auswerteeinheit (5);
- Durchführen des Bremsvorgangs abhängig von der bestimmten Bremsstrategie,
**dadurch gekennzeichnet, dass**
- eine Zeitdauer, wie lange ein Betätigungselement (9) der elektrischen Feststellbremse (3) durch den Insassen (8) bestätigt wird, bestimmt wird, wobei die bestimmte Zeitdauer bei dem Bestimmen der Bremsstrategie berücksichtigt wird, wobei der Bremsvorgang solange durchgeführt wird, solange das Betätigungselement (9) bestätigt wird.

2. Verfahren nach Anspruch 1, wobei
der Auswerteeinheit Navigationsinformationen und/oder Informationen von weiteren Fahrzeugen (11) in der Umgebung (4) bereitgestellt werden, wobei die Navigationsinformationen und/oder die Informationen der weiteren Fahrzeuge (11) bei dem Bestimmen der Bremsstrategie berücksichtigt werden.

3. Verfahren nach Anspruch 1 oder 2, wobei
abhängig von einer aktuellen Trajektorie (13) des Fahrzeugs (1) und von der zumindest einen Umgebungsinformation eine Brems-Trajektorie (14) bestimmt wird, wobei der Bremsvorgang abhängig von der bestimmten Brems-Trajektorie (14) durchgeführt wird.

4. Verfahren nach einem der vorhergehenden Ansprüche, wobei
mit einer Innenraum-Erfassungseinheit (12) die Insassen (8) des Fahrzeugs (1), welche sich in einem Fahrgastinnenraum (15) des Fahrzeugs (1) befinden, erfasst werden,
wobei abhängig von den erfassten Insassen (8) ein Zustand und/oder ein Verhalten zumindest eines Insassen (7, 8) der Insassen (8) bestimmt wird, wobei der Zustand und/oder das Verhalten des zumindest einen Insassen (7, 8) bei dem Bestimmen der Bremsstrategie berücksichtigt wird, insbesondere abhängig von dem Zustand und/oder dem Verhalten des zumindest einen Insassen (7, 8) ein systemseitiger Eingriff in eine Querführung des Fahrzeugs (1) durchgeführt wird.

5. Verfahren nach einem der vorhergehenden Ansprüche, wobei
die Umgebung (4) des Fahrzeugs (1) und/oder ein Zustand des Fahrzeugs (1) während der Fortbewegungsfahrt erfasst wird, so dass während der Fortbewegungsfahrt fortlaufend ein dynamisches Prädizieren einer Prädiktions-Bremsstrategie erfolgen kann, wobei die Prädiktions-Bremsstrategie bei dem Bestimmen der Bremsstrategie bei der betätigten elektrischen Feststellbremse berücksichtigt (3) werden kann.

6. Verfahren nach einem der vorhergehenden Ansprüche, wobei
bei dem Erkennen des Betätigens der elektrischen Feststellbremse (3) überprüft wird, ob aufgrund einer aktuellen Verkehrssituation und/oder Fahrzeugsituation und/oder Insassensituation ein Bremsvorgang durchzuführen ist oder nicht.

7. Verfahren nach einem der vorhergehenden Ansprüche, wobei
mit der Bremsstrategie eine Bremskraft für zumindest eine Bremsanlage des Fahrzeugs (1), eine Bremsdauer, eine Bremsintensität, ein Start-Zeitpunkt für den Bremsvorgang und/oder eine Art des Bremsvorgangs charakterisiert wird.

8. Elektronisches Bremssystem (6) mit einer Erfassungseinheit (16), einer Auswerteeinheit (5) und einer elektrischen Feststellbremse (3), wobei das elektronische Bremssystem (6) zum Durchführen eines Verfahrens nach einem der vorhergehenden Ansprüche ausgebildet ist.

9. Fahrzeug (1) mit einem elektronischen Bremssystem (6) nach Anspruch 8.

## Claims

1. Method for carrying out a braking operation of a vehicle (1), wherein the following steps are carried out:
- detecting an actuation, by an occupant (8) of the vehicle (1), of an electric parking brake (3) of the vehicle (1) during a movement journey of the vehicle (1);
- capturing at least one piece of environmental information in an environment (4) of the vehicle (1);
- determining, by an evaluation unit (5), a braking strategy on the basis of the at least one piece of environmental information and on the actuated electric parking brake (3);
- carrying out the braking operation on the basis of the determined braking strategy,
**characterized in that**
- a duration for which an actuating element (9) of the electric parking brake (3) is actuated by the occupant (8) is determined, wherein the determined duration is taken into account when determining the braking strategy, wherein the braking operation is carried out as long as the actuating element (9) is actuated.

2. Method according to claim 1, wherein
the evaluation unit is provided with navigation information and/or information from other vehicles (11) in the environment (4), wherein the navigation information and/or the information from the other vehicles (11) is taken into account when determining the braking strategy.

3. Method according to claim 1 or 2, wherein
a braking trajectory (14) is determined on the basis of a current trajectory (13) of the vehicle (1) and on the basis of the at least one piece of environmental information, wherein the braking operation is carried out on the basis of the determined braking trajectory (14).

4. Method according to any of the preceding claims, wherein
by means of an interior capture unit (12), the occupants (8) of the vehicle (1) who are in a passenger compartment (15) of the vehicle (1) are captured, wherein, on the basis of the captured occupants (8), a state and/or a behavior of at least one occupant (7, 8) of the occupants (8) is determined, wherein the state and/or the behavior of the at least one occupant (7, 8) is taken into account when determining the braking strategy, in particular a system-side intervention in a steering of the vehicle (1) is carried out on the basis of the state and/or the behavior of the at least one occupant (7, 8).

5. Method according to any of the preceding claims, wherein
the environment (4) of the vehicle (1) and/or a state of the vehicle (1) during the movement journey is captured, so that a dynamic prediction of a predictive braking strategy can be continuously performed during the movement journey, wherein the predictive braking strategy can be taken into account when determining the braking strategy when the electric parking brake (3) is actuated.

6. Method according to any of the preceding claims, wherein
during the detection of the actuation of the electric parking brake (3), it is checked whether or not, on the basis of a current traffic situation and/or vehicle situation and/or occupant situation, a braking operation is to be carried out.

7. Method according to any of the preceding claims, wherein
a braking force for at least one braking system of the vehicle (1), a braking duration, a braking intensity, a start time for the braking operation and/or a type of braking operation are **characterized by** the braking strategy.

8. Electronic braking system (6) comprising a capture unit (16), an evaluation unit (5) and an electric parking brake (3), wherein the electronic braking system (6) is designed to carry out a method according to any of the preceding claims.

9. Vehicle (1) comprising an electronic braking system (6) according to claim 8.

## Revendications

1. Procédé pour la mise en œuvre d'un processus de freinage d'un véhicule (1), dans lequel les étapes suivantes sont mises en œuvre :
- reconnaissance d'un actionnement d'un frein de stationnement électrique (3) du véhicule (1) pendant un déplacement du véhicule (1) par un occupant (8) du véhicule (1) ;
- détection d'au moins une information d'environnement dans un environnement (4) du véhicule (1) ;
- détermination, par une unité d'évaluation (5), d'une stratégie de freinage en fonction de l'au moins une information d'environnement et du frein de stationnement électrique (3) actionné ;
- mise en œuvre du processus de freinage en fonction de la stratégie de freinage déterminée,
**caractérisé en ce que**
- une durée pendant laquelle un élément d'actionnement (9) du frein de stationnement électrique (3) est actionné par l'occupant (8) est déterminée, dans lequel la durée déterminée est prise en compte lors de la détermination de la stratégie de freinage, dans lequel le processus de freinage est mis en œuvre tant que l'élément d'actionnement (9) est actionné.

2. Procédé selon la revendication 1, dans lequel
des informations de navigation et/ou des informations provenant d'autres véhicules (11) présents dans l'environnement (4) sont fournis à l'unité d'évaluation, dans lequel les informations de navigation et/ou les informations des autres véhicules (11) sont prises en compte lors de la détermination de la stratégie de freinage.

3. Procédé selon la revendication 1 ou 2, dans lequel
une trajectoire de freinage (14) est déterminée en fonction d'une trajectoire actuelle (13) du véhicule (1) et de l'au moins une information d'environnement, dans lequel le processus de freinage est mis en œuvre en fonction de la trajectoire de freinage (14) déterminée.

4. Procédé selon l'une des revendications précédentes, dans lequel
les occupants (8) du véhicule (1), lesquels se trouvent dans un habitacle pour passagers (15) du véhicule (1), sont détectés au moyen d'une unité de saisie d'habitacle (12), dans lequel un état et/ou un comportement d'au moins un occupant (7, 8) parmi les occupants (8) sont déterminés en fonction des occupants (8) détectés, dans lequel l'état et/ou le comportement de l'au moins un occupant (7, 8) sont pris en compte lors de la détermination de la stratégie de freinage, en particulier, une intervention côté système sur un guidage transversal du véhicule (1) est mise en œuvre en fonction de l'état et/ou du comportement de l'au moins un occupant (7, 8).

5. Procédé selon l'une des revendications précédentes, dans lequel
l'environnement (4) du véhicule (1) et/ou un état du véhicule (1) pendant le déplacement sont détectés de sorte qu'une prédiction dynamique d'une stratégie de freinage prédictive peut être effectuée en continu pendant le déplacement, dans lequel la stratégie de freinage prédictive peut être prise en compte lors de la détermination de la stratégie de freinage lorsque le frein de stationnement électrique (3) est actionné.

6. Procédé selon l'une des revendications précédentes, dans lequel
lors de la reconnaissance de l'actionnement du frein de stationnement électrique (3), on vérifie si un processus de freinage est mis en œuvre ou non sur la base d'une situation de circulation actuelle et/ou d'une situation de véhicule et/ou d'une situation d'occupant.

7. Procédé selon l'une des revendications précédentes, dans lequel
une force de freinage pour au moins une installation de freinage du véhicule (1), une durée de freinage, une intensité de freinage, un moment de déclenchement du processus de freinage et/ou un type du processus de freinage sont caractérisés au moyen de la stratégie de freinage.

8. Système de freinage électronique (6) comportant une unité de détection (16), une unité d'évaluation (5) et un frein de stationnement électrique (3), dans lequel le système de freinage électronique (6) est configuré pour mettre en œuvre un procédé selon l'une des revendications précédentes.

9. Véhicule (1) comportant un système de freinage électronique (6) selon la revendication 8.
